# EUROPEAN PATENT APPLICATION

(11) **EP 3 734 089 A1**
(43) Date of publication of application: **04.11.2020**
(21) Application number: 18893647.0
(22) Date of filing: 21.12.2018
(51) Int. Cl.: F16B 39/24

(54) **ANTI-LOOSENING WASHER FOR THREADED CONNECTOR AND PREPARATION METHOD THEREFOR**

(30) Priority: 25.12.2017 CN 201711423470
(71) Applicant: BYD Company Limited, Guangdong 518118 (CN)
(72) Inventor: GONG, Qing, Shenzhen, Guangdong 518118 (CN); GUO, Qiang, Shenzhen, Guangdong 518118 (CN); FANG, Bin, Shenzhen, Guangdong 518118 (CN); WANG, Mengde, Shenzhen, Guangdong 518118 (CN); AN, Wei, Shenzhen, Guangdong 518118 (CN)
(74) Representative: Arnold & Siedsma
(86) International application number: PCT/CN2018/122513
(87) International publication number: WO 2019/128856

(57) **Abstract**

An anti-loosening washer (100) for a threaded connector (200) and a fabrication method thereof are provided. The anti-loosening washer (100) includes an upper washer (1) and a lower washer (2). A plurality of first ratchet teeth (3) distributed in a fan shape are disposed at the bottom of the upper washer (1), and a plurality of second ratchet teeth (4) engaged with the first ratchet teeth (3) are disposed on the top of the lower washer (2). The first ratchet tooth (3) has a wide surface (31) attached to the second ratchet tooth (4) and a narrow surface (32) with an area less than an area of the wide surface (31). The wide surface (31) is a spiral surface formed through a spiral motion performed by a generatrix (12) spaced apart from an axis (11a) around the axis (11a) by using a central axis (11) of the upper washer (1) as the axis (11a). A lead angle of a wire (13) at a middle diameter position of the spiral surface is greater than a lead angle of the threaded connector (200).

## Description

### CROSS-REFERENCE TO RELATED APPLICATIONS

This application is proposed based on and claims priority to Chinese patent application No. 201711423470.9 filed on December 25, 2017. The entire content of the above-referenced application is incorporated herein by reference.

### FIELD

The present disclosure relates to an anti-loosening washer for a threaded connector and a fabrication method thereof.

### BACKGROUND

An engagement surface between existing combined anti-loosening washers is generally an ordinary inclined surface. The ordinary inclined engagement surface design has a poor anti-loosening effect. A calculated effective area of the anti-loosening washer with the ordinary inclined surface design accounts for only about 50% of a total inclined surface area, resulting in an anti-loosening failure of the anti-loose washer.

### SUMMARY

The present disclosure is intended to resolve at least one of the technical problems in the related art to some extent.

To this end, the present disclosure is intended to provide an anti-loosening washer for a threaded connector, the anti-loosening washer having a better anti-loosening effect.

The present disclosure is further intended to provide an anti-loosening washer and a fabrication method thereof.

An embodiment of a first aspect of the present disclosure provides an anti-loosening washer for a threaded connector. The anti-loosening washer includes an upper washer and a lower washer, a plurality of first ratchet teeth distributed in a fan shape being disposed at the bottom of the upper washer, and a plurality of second ratchet teeth engaged with the first ratchet teeth being disposed on the top of the lower washer. The first ratchet tooth has a wide surface attached to the second ratchet tooth and a narrow surface with an area less than an area of the wide surface. The wide surface is a spiral surface formed through a spiral movement performed by a generatrix spaced apart from an axis around the axis by using a central axis of the upper washer as the axis. A lead angle of a wire at a middle diameter position of the spiral surface is greater than a lead angle of the threaded connector. The middle diameter position of the spiral surface is a position on the spiral surface equidistant from an inner periphery and an outer periphery of the first ratchet tooth. A first connection structure to be connected to the threaded connector is disposed on the top of the upper washer. A second connection structure to be connected to a workpiece is disposed on the bottom of the lower washer.

In some embodiments, the first connection structure includes a plurality of third ratchet teeth distributed in a fan shape and to bite into the threaded connector, and the second connection structure includes a plurality of fourth ratchet teeth distributed in a fan shape and to bite into a surface of the workpiece.

In some embodiments, the lead angle of the wire at middle diameter position of the spiral surface is greater than lead angle of the threaded connector by 0.05-0.45°.

In some embodiments, apex angles α of the first ratchet tooth and the second ratchet tooth are each 70-150°, and apex angles β of the third ratchet tooth and the fourth ratchet tooth are each 60-150°.

In some embodiments, tooth heights of the first ratchet tooth and the second ratchet tooth are each 80-300 microns, and tooth heights of the third ratchet tooth and the fourth ratchet teeth are each 50-200 microns, the tooth height being a vertical distance between a highest point and a lowest point of a corresponding ratchet tooth.

In some embodiments, the wide surface of the first ratchet tooth is an inclined spiral surface, and a complementary angle θ of an included angle between the generatrix and the axis is 0.3-0.8°.

In some embodiments, the anti-loosening washer is made of zirconium-based amorphous alloy.

An embodiment of a second aspect of the present disclosure provides a method for fabricating an anti-loosening washer, including: fabricating the anti-loosening washer by using a forging process or a semi-solid die-casting process.

In some embodiments, the step of fabricating the anti-loosening washer by using a semi-solid die-casting process includes: melting an alloy material and then processing the alloy material into semi-solid alloy; and feeding the obtained semi-solid alloy into a mold cavity for die casting.

In some embodiments, coating processing is performed on a surface of the anti-loosening washer, the coating processing being at least one of a laser process, a physical vapor deposition process, and a chemical vapor deposition process.

Compared with the prior art, the present disclosure has the following advantages.
1. The wide surface of the ratchet teeth of the upper washer and the lower washer of the anti-loosening washer provided in the present disclosure is set to a spiral surface, and the lead angle of the spiral surface is greater than the lead angle of the threaded connector, so that an anti-loosening area can be increased and an anti-loosening effect can be enhanced.
2. The wide surface of the ratchet tooth of the anti-loosening washer of the present disclosure is exemplarily an inclined spiral surface, so that an engagement area reduction caused by interference can be avoided during engagement of the wide surfaces of the ratchet teeth.
3. The anti-loosening washer of the present disclosure may be fabricated by using a semi-solid die-casting process, thereby improving molding accuracy and smoothness, and reducing roughness.

Other features and advantages of the present disclosure will be described in detail in the following detailed description.

Other aspects and advantages of the present disclosure will be given in the following description, some of which will become apparent from the following description or may be learned from practices of the present disclosure.

### BRIEF DESCRIPTION OF THE DRAWINGS

The accompanying drawings are provided to further understand the present disclosure, and they constitute a part of the application. The accompanying drawings, along with the detailed description below, are used to explain the present disclosure, and pose no limitation on the present disclosure. In the figures:
FIG. 1 is a schematic structural diagram of a specific implementation of an anti-loosening washer according to the present disclosure.
FIG. 2 is a schematic structural diagram of a specific implementation of a spiral surface according to the present disclosure.
FIG. 3 is a schematic structural diagram of a specific implementation of an upper washer according to the present disclosure.
FIG. 4 is a schematic structural diagram of another specific implementation of an upper washer according to the present disclosure.
FIG. 5 is a schematic structural diagram of still another specific implementation of an upper washer according to the present disclosure.
FIG. 6 is a schematic diagram of a cross-section along a line A-A in FIG. 5.
FIG. 7 is a schematic diagram of a region B in FIG. 6.
FIG. 8 is a reference diagram of a use status of a specific implementation of an anti-loosening washer according to the present disclosure.

### DESCRIPTION OF REFERENCE NUMERALS

100 Anti-loosening washer; 200 Threaded connector; 300 Workpiece;
11a Axis; 1a First connection structure; 2a Second connection structure;
1 Upper washer; 11 Central axis; 12 Generatrix;
13 Wire; 14 Projection; 2 Lower washer;
3 First ratchet tooth; 31 Wide surface; 32 Narrow surface;
4 Second ratchet tooth; 5 Third ratchet tooth; 6 Fourth ratchet tooth.

### DETAILED DESCRIPTION

The following describes specific embodiments of the present disclosure in detail with reference to the accompanying drawings. It should be understood that the specific implementations described herein are merely used to describe and explain the present disclosure but are not intended to limit the present disclosure.

In the present disclosure, unless otherwise stated, directional terms such as "up, down, bottom, and top" used herein may refer to drawing directions of FIG. 1. The anti-loosening washer 100 in the present disclosure is not limited by "up, down, bottom, and top" described in the present disclosure during specific use. A distance in this disclosure refers to a length of the shortest connecting line between two components.

As shown in FIG. 1 to FIG. 6, the present disclosure provides an anti-loosening washer 100 for a threaded connector 200. The anti-loosening washer includes an upper washer 1 and a lower washer 2. A plurality of first ratchet teeth 3 distributed in a fan shape are disposed at the bottom of the upper washer 1, and a plurality of second ratchet teeth 4 engaged with the first ratchet teeth 3 are disposed on the top of the lower washer 2. The first ratchet tooth 3 has a wide surface 31 attached to the second ratchet tooth 4 and a narrow surface 32 with an area less than an area of the wide surface 31. The wide surface 31 is a spiral surface formed through a spiral movement performed by a generatrix 12 spaced apart from an axis 11a around the axis 11a by using a central axis 11 of the upper washer 1 as the axis 11a. A lead angle of a wire 13 at a middle diameter position of the spiral surface is greater than a lead angle of the threaded connector 200. The middle diameter position of the spiral surface is a position on the spiral surface equidistant from an inner periphery and an outer periphery of the first ratchet tooth 3.

When the threaded connector 200 includes a bolt and a nut, the lead angle of the threaded connector 200 specifically refers to a lead angle of the bolt.

In the present disclosure, the lead angle is an included angle between a tangent of a spiral line of the spiral surface of the threaded connector 200 on a middle-diameter cylinder and a plane perpendicular to the axis 11a. The middle-diameter cylinder is a virtual cylinder formed by using the axis 11a as a rotation axis and a middle diameter of the spiral surface of the threaded connector 200 as a diameter. The wide surface 31 of the upper washer 1 is a spiral surface. As shown in FIG. 2, the wire 13 at the middle diameter position of the wide surface 31 is a spiral surface.

With reference to FIG. 8, a first connection structure 1a to be connected to the threaded connector 200 is disposed on the top of the upper washer 1. A second connection structure 2a to be connected to a workpiece 300 is disposed on the bottom of the lower washer 2. In the present disclosure, engagement means that the first ratchet tooth 3 of the upper washer 1 and the second ratchet tooth 4 of the lower washer 2 are adaptively engaged.

An action mechanism the anti-loosening washer 100 of the present disclosure is as follows. When the threaded connector 200, the anti-loosening washer 100, and the workpiece 300 are vibrated, the threaded connector 200 (for example, a bolt and a nut) first loosens. However, since the top of the upper washer 1 and the bottom of the lower washer 2 are respectively connected to the threaded connector 200 and the workpiece 300 through the connection structures (the first connection structure 1a and the second connection structure 2a), the lower washer 2 and the workpiece 300 are relatively stable and the upper washer 1 and the threaded connector 200 are relatively stable, so that the anti-loosening washer 100 loosens only at an engagement surface between the upper washer 1 and the lower washer 2.

As shown in FIG. 1 to FIG. 4, the first ratchet tooth 3 at the bottom of the upper washer 1 and the second ratchet tooth 4 at the top of the lower washer 2 are engaged with each other, a lead direction of the spiral surface (the wide surface 31) of the first ratchet tooth 3 is the same as a lead direction of the threaded connector 200, and the lead angle of the wire 13 at the middle diameter position of the spiral surface is greater than the lead angle of the threaded connector 200. Exemplarily, the lead angle of the wire 13 at the middle diameter position of the spiral surface is greater than the lead angle of the threaded connector 200 by 0.05-0.45°. Therefore, within a tooth height of one ratchet tooth (the first ratchet tooth 3 or the second ratchet tooth 4), regardless of degrees by which the threaded connector 200 and the spiral surface rotate, a rising distance of the spiral surface (a loosening distance of the washer) is always greater than a rising distance of the threaded connector 200 (a loosening distance of the threaded connector 200). Due to incompressibility of solids, great pressure is generated on the engagement surface between the upper washer 1 and the lower washer 2. The pressure is transmitted to the threaded connector 200 to increase a frictional force inside the threaded connector 200, thereby stopping or reducing loosening tendency of the threaded connector 200. For example, the threaded connector 200 may include a bolt and a nut. The frictional force inside the threaded connector 200 is a frictional force of a contact surface between the bolt and the nut.

In the present disclosure, the connection structure between the upper washer 1 and the threaded connector 200 and the connection structure between the lower washer 2 and the workpiece 300 are not particularly limited, and conventional connection methods such as insertion, seizing, riveting, and welding may be used. For example, as shown in FIG. 1 to FIG. 3, the first connection structure 1a may include a plurality of third ratchet teeth 5 distributed in a fan shape and to bite into the threaded connector 200, and second connection structure 2a may include a plurality of fourth ratchet teeth 6 distributed in a fan shape and to bite into a surface of the workpiece 300. In this connection method, hardness of surfaces of the upper washer 1 and the lower washer 2 is greater than hardness of the workpiece 300 and the threaded connector 200. During use of the anti-loosening washer 100, appropriate pretension may be applied so that the third ratchet tooth 5 and the four ratchet tooth 6 can bite into the workpiece 300 and the threaded connector 200. Exemplarily, there are more third ratchet teeth 5 and fourth ratchet teeth 6 more than the first ratchet teeth 3 and the second ratchet teeth 4 to improve connection strength between the third ratchet teeth 5 and the fourth ratchet teeth 6.

The spiral surface is well known to those skilled in the art. As shown in FIG. 2, the spiral surface of the present disclosure refers to a curved surface formed through a spiral movement performed by the generatrix 12 along the central axis 11 and the spiral line. During the rotation, trajectories of all points on the generatrix 12 are spiral lines, and a projection 14 of the wire 13 at the middle diameter position of the spiral surface on a horizontal plane is circular. The spiral surface of the present disclosure is different from an existing spiral surface. A central through hole penetrating the threaded connector 200 is disposed in the middle of the upper washer 1 and the lower washer 2, so that a part of the spiral surface close to the axis 11a is missing.

The anti-loosening washer 100 of the present disclosure may be designed to have various sizes according to a size of the threaded connector 200. A length of the generatrix 12 of the spiral surface may be designed according to areas of action with the threaded connector 200 and the workpiece 300. A distance from the middle diameter position of the spiral surface to the axis 11a may be designed according to inner diameters of the central through holes of the upper washer 1 and the lower washer 2. A pitch of the spiral surface may be designed according to the lead angle of the threaded connector 200. For example, for a bolt of a specification M10 (that is, a major diameter is 10 mm) as an example, the length of the generatrix 12 of the spiral surface may be 4-4.1 mm, the distance from the middle diameter position of the spiral surface to the axis 11a may be 6.5-7.8 mm, and the pitch may be 2.0-3.5 mm.

According to the present disclosure, the tooth height of ratchet tooth is an important parameter of ratchet tooth and should be properly set. The tooth height is a vertical distance between a highest point and a lowest point of the ratchet tooth. It is found through research that tooth heights of the first ratchet tooth 3 and the second ratchet tooth 4 may each be 80-300 microns, and exemplarily, 100-200 microns. Tooth heights of the ratchet tooth 5 and the fourth ratchet tooth 6 may each be 50-200 microns, and exemplarily, 80-160 microns. The tooth height of the ratchet tooth may be determined based on a number of ratchet teeth disposed on the top of the upper washer 1 and on the bottom of the lower washer 2 and apex angles of the ratchet teeth. For example, if ten first ratchet teeth 3 are disposed on the bottom of the upper washer 1, a larger apex angle of the ratchet tooth 3 brings a smaller tooth height.

Generally, as shown in FIG. 3, apex angles α of the first ratchet tooth 3 and the second ratchet tooth 4 may each be 70-150°, exemplarily, 80-110°, and more exemplarily, 90-100°. The apex angle α is an included angle formed by the wide surface 31 and the narrow surface 32. The included angle is formed by making, to each of the wide surface 31 and the narrow surface 32, a tangent perpendicular to a radial direction of the washer from an intersection of the wide surface 31 and the narrow surface 32. Apex angles β of the third ratchet tooth 5 and the fourth ratchet tooth 6 may each be 60-150°, exemplarily, 70-100°, and more exemplarily 80-95°. Those skilled in the art may also set tooth heights and apex angles of other ranges as required, and details are not described again in the present disclosure. In addition, in order to facilitate portability and improve wear resistance, a tip of the ratchet tooth (the intersection between the wide surface 31 and the narrow surface 32) may be pre-ground or cut.

According to the present disclosure, a larger action surface between the upper washer 1 and the lower washer 2 brings a stronger connection between the upper washer and the lower washer. An effective engagement area of the anti-loosening washer 100 of the present disclosure can reach 65-75%, which is much higher than an engagement area of an existing anti-loosening washer 100. Due to different lead angles at different diameter positions in the radial direction of the spiral surface, the wide surface 31 between the upper washer 1 and the lower washer 2 having the same parameters of the first ratchet tooth 3 and the second ratchet tooth 4 cannot be completely engaged from an inside to an outside, resulting in interference. In order to resolve the problem, as shown in FIG. 6 to FIG. 7, the wide surface 31 of the first ratchet tooth 3 may be an inclined spiral surface, and a complementary angle θ of an included angle between the generatrix 12 and the axis 11a may be 0.3-0.8°. In other words, the wide surface 31 is gradually recessed from the outside to the inside in the radial direction, so that when a design parameter of the second ratchet tooth 4 is the same as a design parameter of the first ratchet tooth 3, there is a larger contact area between the wide surfaces 31 of the first ratchet tooth and the second ratchet tooth, improving stability and reliability of cooperation between the upper washer 1 and the lower washer 2.

The existing anti-loosening washer 100 is generally made of an alloy steel material, and generally has surface hardness below 350 HV after molding. At least one of heat processing and coating is required on the surface to increase the hardness, increasing costs and subsequent processes. In order to resolve the problem, the anti-loosening washer 100 is exemplarily made of a zirconium-based alloy material, which is exemplarily zirconium-based amorphous alloy. The surface hardness of the zirconium-based amorphous alloy can reach 500 HV, so that in most anti-loosening environments, the anti-loosening washer 100 can be used without subsequent processing after molding.

The present disclosure further provides a method for fabricating the provided anti-loosening washer 100. The fabrication method includes: fabricating the anti-loosening washer 100 by using a forging process or a semi-solid die-casting process.

According to the present disclosure, the forging process is well known to those skilled in the art, and the anti-loosening washer 100 may be formed by using alloy steel such as carbon steel or stainless steel through a forging and pressing process. Forging means to place a metal blank between convex and concave molds fixed on upper and lower worktables of a press, and drive, through the upper and lower worktables, the concave and convex molds to close for pressing the blank into a desired shape. The method is simple and easy, and the design is simple.

The present disclosure exemplarily adopts a semi-solid die-casting process to fabricate the anti-loosening washer 100, which may include the following steps. a: Melt an alloy material and then process the alloy material into semi-solid alloy. The semi-solid alloy may be heated and melted, and then poured into a molten material cylinder, and then the molten alloy material is changed to a semi-solid through stirring or by using a method that can implement a stirring effect, so that the semi-solid alloy becomes solid-liquid mixed slurry in which specific solid phase components are evenly suspended, so that the semi-solid alloy has a rheological property and is easily processed and molded, b: Feed the obtained semi-solid alloy into a mold cavity for die casting. The molding process may be molding by quickly pressing the semi-solid alloy into the mold cavity by using a hammer head driven by an injection rod.

Compared to the anti-loosening washer 100 fabricated by using the forging process, the anti-loosening washer 100 fabricated by using the semi-solid die-casting process has higher molding accuracy, clearer product contours, and higher surface quality (higher finish and lower roughness). In addition, the used mold has a longer life (50,000-70,000 mold times), which is suitable for mass production.

Further, in order to meet requirements of a special use environment or to increase a service life of the anti-loosening washer 100, coating processing may be performed on a surface of anti-loosening washer 100. The coating processing may be at least one of a laser process, a physical vapor deposition process, and a chemical vapor deposition process. For a forged anti-loosening washer 100, the coating processing may be used for increasing hardness of the surface of the anti-loosening washer 100, so that the hardness of the anti-loosening washer 100 reaches 450HV. In addition, in some application environments, the anti-loosening washer 100 is required to have relatively high corrosion resistance. In this case, the coating processing may be performed on the surface of the anti-loosening washer 100 to improve an anti-corrosion effect. For the anti-loosening washer 100 fabricated by using the semi-solid die-casting process, the surface of the washer is well boned to a coating material, and the formed hardened coating layer is durable. In addition, since the anti-loosening washer 100 using the zirconium-based amorphous alloy material has excellent corrosion resistance, which is equivalent to corrosion resistance of SUS304 stainless steel, the anti-loosening washer can be used for a long time without anti-corrosion processing in common use.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. An anti-loosening washer (100) for a threaded connector (200), the anti-loosening washer comprising an upper washer (1) and a lower washer (2), a plurality of first ratchet teeth (3) distributed in a fan shape being disposed at the bottom of the upper washer (1), and a plurality of second ratchet teeth (4) engaged with the first ratchet teeth (3) being disposed on the top of the lower washer (2), the first ratchet tooth (3) having a wide surface (31) attached to the second ratchet tooth (4) and a narrow surface (32) with an area less than an area of the wide surface (31), the wide surface (31) being a spiral surface formed through a spiral movement performed by a generatrix (12) spaced apart from an axis (11a) around the axis (11a) by using a central axis (11) of the upper washer (1) as the axis (11a), a lead angle of a wire (13) at a middle diameter position of the spiral surface being greater than a lead angle of the threaded connector (200), the middle diameter position of the spiral surface being a position on the spiral surface equidistant from an inner periphery and an outer periphery of the first ratchet tooth (3); and a first connection structure (1a) to be connected to the threaded connector (200) being disposed on the top of the upper washer (1), and a second connection structure (2a) to be connected to a workpiece (300) being disposed on the bottom of the lower washer (2).

2. The anti-loosening washer according to claim 1, wherein the first connection structure (1a) comprises a plurality of third ratchet teeth (5) distributed in a fan shape and to bite into the threaded connector (200), and the second connection structure (2a) comprises a plurality of fourth ratchet teeth (6) distributed in a fan shape and to bite into a surface of the workpiece (300).

3. The anti-loosening washer according to claim 1 or 2, wherein the lead angle of the wire (13) at the middle diameter position of the spiral surface is greater than the lead angle of the threaded connector (200) by 0.05-0.45°.

4. The anti-loosening washer according to claim 2 or 3, wherein apex angles α of the first ratchet tooth (3) and the second ratchet tooth (4) are each 70-150°, and apex angles β of the third ratchet tooth (5) and the fourth ratchet tooth (6) are each 60-150°.

5. The anti-loosening washer according to any of claims 2 to 4, wherein tooth heights of the first ratchet tooth (3) and the second ratchet tooth (4) are each 80-300 microns, and tooth heights of the third ratchet tooth (5) and the fourth ratchet teeth (6) are each 50-200 microns, the tooth height being a vertical distance between a highest point and a lowest point of a corresponding ratchet tooth.

6. The anti-loosening washer according to any of claims 1 to 5, wherein the wide surface (31) of the first ratchet tooth (3) is an inclined spiral surface, and a complementary angle θ of an included angle between the generatrix (12) and the axis (11a) is 0.3-0.8°.

7. The anti-loosening washer according to any of claims 1 to 6, wherein the anti-loosening washer is made of zirconium-based amorphous alloy.

8. A method for fabricating the anti-loosening washer according to any of claims 1 to 7, comprising: fabricating the anti-loosening washer by using a forging process or a semi-solid die-casting process.

9. The fabrication method according to claim 8, wherein the step of fabricating the anti-loosening washer by using a semi-solid die-casting process comprises:
melting an alloy material and then processing the alloy material into semi-solid alloy; and
feeding the obtained semi-solid alloy into a mold cavity for die casting.

10. The fabrication method according to claim 8 or 9, wherein coating processing is performed on a surface of the anti-loosening washer, the coating processing being at least one of a laser process, a physical vapor deposition process, and a chemical vapor deposition process.
